# EUROPEAN PATENT APPLICATION

(11) **EP 4 494 749 A1**
(43) Date of publication of application: **22.01.2025**
(21) Application number: 23770530.6
(22) Date of filing: 07.03.2023
(51) Int. Cl.: B01D 61/54, C02F 1/469

(54) **METHOD FOR OPERATING ELECTRIC DEIONIZER**

(30) Priority: 16.03.2022 JP 2022041516
(71) Applicant: Kurita Water Industries Ltd., Tokyo 164-0001 (JP)
(72) Inventor: KATO, Teruhisa, Tokyo 164-0001 (JP); ABE, Koya, Tokyo 164-0001 (JP)
(74) Representative: Hoffmann Eitle
(86) International application number: PCT/JP2023/008491
(87) International publication number: WO 2023/176574

(57) **Abstract**

Provided is a method for operating electric deionizer, in which concentration chambers and desalination chambers are defined between an anode and a cathode by an ion exchange membrane, concentrated water flows through the concentration chambers, raw water flows through the desalination chambers as water to be treated, and the treated water is extracted as product water, the method being characterized in that the water flows through all of the concentration chambers in the opposite direction of the water-passing direction of the water to be treated in the desalination chambers.

## Description

### Technical Field

The present invention relates to a method for operating an electric deionizer (electric deionized water production apparatus) for producing deionized water.

### Related Art

Generally, in an electric deionizer, cation exchange membranes and anion exchange membranes are alternately arranged between a cathode and an anode, and desalination chambers and concentration chambers are defined and formed by these cation exchange membranes and anion exchange membranes, and the desalination chambers and concentration chambers are filled with ion exchange resin. As ion exchange membranes such as cation exchange membranes and anion exchange membranes, membranes formed by graft polymerization of monomers having various anion exchange functions or cation exchange functions may also be used in addition to heterogeneous membranes formed by adding a binder such as polystyrene to a powdered ion exchange resin, homogeneous membranes formed by polymerization of styrene-divinylbenzene.

FIG. 2 shows the basic configuration of the electric deionizer of Patent Document 1. As shown in the drawing, an electric deionizer has cation exchange membranes (CEM) and anion exchange membranes (AEM) arranged alternately between a negative electrode and an anode, with desalination chambers and concentration chambers formed alternately by these cation exchange membranes and anion exchange membranes, and each desalination chamber and concentration chamber is filled with ion exchange resin (not shown).

In the electric deionizer as described above, when raw water is passed through the desalination chamber and concentrated water is passed through the concentration chamber and an electric current is applied between the cathode and anode, ions move from the desalination chamber through the anion exchange membrane and cation exchange membrane to the concentration chamber, and deionized water (pure water) is obtained as the outflow water from the desalination chamber. The concentrated water flowing out from the concentration chamber is either discarded or partially recycled.

Such electric deionizer are used as pure water producing apparatus in various industries, such as in the semiconductor chip manufacturing process, thermal or nuclear power plants, petrochemical plants, and pharmaceutical manufacturing processes.

The semiconductor market in particular demands high quality product water, and in many cases requires a treated water resistivity of 15 MΩ·cm or more and a high boron and silica removal rate. Moreover, in recent years, there has been a demand for setting operating conditions that take into account not only high purity of treated water but also power and water conservation.

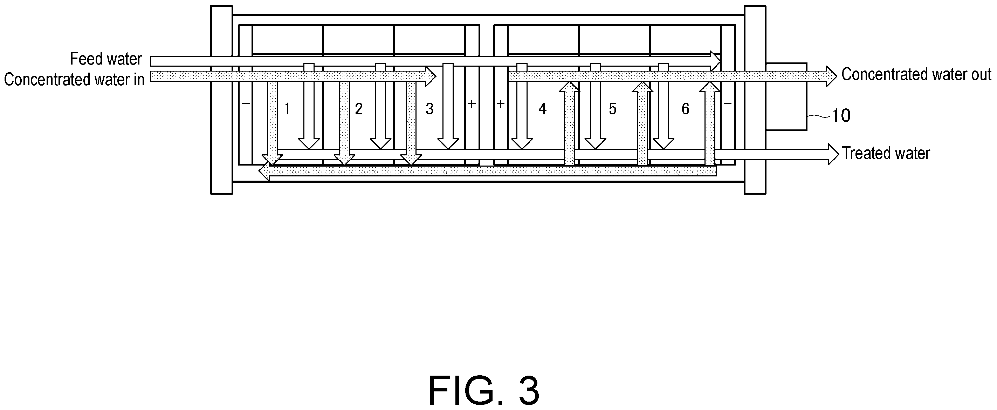

As an electric deionizer for semiconductor manufacturing processes, the IP-VNX55EP-2 manufactured by Evoqua Water Technologies, LLC (558 Clark Road Tewksbury, Massachusetts 01876, USA) is commercially available. As shown in FIG. 3, an electric deionizer VNX55EP-2 includes sub blocks 1 to 6. Each of the sub blocks 1 to 6 has a plurality of pairs of desalination chambers and concentration chambers formed by alternatingly arranged cation exchange membranes (CEM) and anion exchange membranes (AEM).

In the method for operating shown in FIG. 3, feed water (raw water) and concentrated water are supplied to sub blocks 1 to 3 from their respective ports. A portion of the feed water passes through the feed water passages (upper head parts) of the sub blocks 1 to 3 and is supplied to the feed water passages (upper head parts) of sub blocks 4 to 6. This feed water passes through each desalination chamber of each of the sub blocks 1 to 6, and is extracted from a treated water extraction port via a desalted water collection channel (lower head part).

The concentrated water is supplied to the head parts (upper head parts) of the sub blocks 1 to 3, passes through each of the concentration chambers of the sub blocks 1 to 3, introduced from concentrated water collection channels (lower head parts) of the sub blocks 1 to 3 into concentrated water head parts (lower head parts) of the sub blocks 4 to 6, passed into each concentration chamber of the sub blocks 4 to 6, , and is extracted from the concentrated water outlet ports via the upper head parts of the concentrated water of the sub blocks 4 to 6.

In the method for operating the electric deionizer VNX55EP-2, in the sub blocks 1 to 3, feed water (raw water) and concentrated water are passed into the desalination chambers and concentration chambers in cocurrent flow, while in the sub blocks 4 to 6, the feed water and concentrated water are made to flow in countercurrents (opposite directions) between the desalination chambers and concentration chambers. That is, in FIG. 3, the feed water is passed into all the desalination chambers in a downward flow manner. On the other hand, the water-passing direction of the concentrated water is downward in the first half (sub blocks 1, 2, and 3) and upward in the second half (sub blocks 4, 5, and 6). In this way, by reversing the water-passing direction of the concentrated water between the sub blocks 1 to 3 and the sub blocks 4 to 6, the amount of concentrated water used is reduced by half.

However, with this water-passing method, the difference in ion concentration between the lower part of the desalination chamber and the lower part of the concentration chamber in the sub blocks 1 to 3 becomes large, causing ions to move from the concentration chamber to the desalination chamber due to concentration diffusion, resulting in a deterioration in the quality of the treated water.

Therefore, in order to obtain high purity product water, it is necessary to install a mechanism for reducing the ionic load of the feed water (e.g. a reverse osmosis membrane device or a membrane deaeration device) upstream of the electric deionizer, and to install a mechanism for further removing ions downstream. As a result, the number of devices in the facility increases, which results in an increase in installation space, an increase in costs, and an increase in power consumption.

The sub blocks 1 and 3 of the electric deionizer VNX55EP-2 shown in FIG. 3 have 17 pairs of desalination chambers and concentration chambers, and the sub block 2 has 16 such pairs. The sub blocks 4 and 6 have 17 such pairs, and the sub block 5 has 16 such pairs. In FIG. 3, "-" indicates the cathode chamber and "+" indicates the anode chamber. Reference numeral 10 denotes a power box.

### Prior-Art Document

### Patent Document

Patent Document 1: JP 2020-524593

### SUMMARY OF INVETION

### Problems to be solved by the Invention

As described above, in the water-passing manner of the electric deionizer of FIG. 3, in the sub blocks 1 to 3, the feed water and concentrated water are cocurrent flows, while in the sub blocks 4 to 6 they are countercurrent flows. As a result, in the sub blocks 1 to 3, the difference in ion concentration between the lower part of the desalination chamber and the lower part of the concentration chamber became large, and ions moved from the concentration chamber to the desalination chamber due to concentration diffusion, resulting in a deterioration in the quality of the treated water.

An object of the present invention is to provide a method for operating electric deionizer capable of preventing the concentration diffusion of ions from the concentration chamber to the desalination chamber and improve water quality.

### Means for solving the Problems

One embodiment of the present invention relates to a method for operating electric deionizer in which concentration chambers and desalination chambers are alternately formed between an anode and a cathode by an ion exchange membrane, concentrated water flows through the concentration chambers, and water to be treated flows through the desalination chambers and extracted as product water. The concentrated water is passed into all of the concentration chambers in an opposite direction of a water-passing direction of the water to be treated in the desalination chambers.

In one embodiment of the present invention, an electrical conductivity of a feed water is 0.1 mS/m to 2.0 mS/m, particularly 0.2 mS/m to 2.0 mS/m.

In one embodiment of the present invention, an inorganic carbonate concentration of a feed water is 50 µg/L to 300 µg/L as C.

In one embodiment of the present invention, a space velocity SV of the desalination chamber is 70/h to 150/h, and a space velocity SV of the concentration chamber is 5/h to 150/h, particularly 5/h to 50/h.

### Effects of Invention

According to the method for operating electric deionizer of the present invention, it is possible to suppress the concentration diffusion of ions from the concentration chamber to the desalination chamber. Thereby, the acceptable range of feed water quality can be expanded and the number of downstream treatment mechanisms can be reduced. Moreover, the equipment can be simplified.

### BRIEF DESCRIPTION OF DRAWINGS

FIG. 1 is a flow diagram showing a method for operating electric deionizer of the present invention.

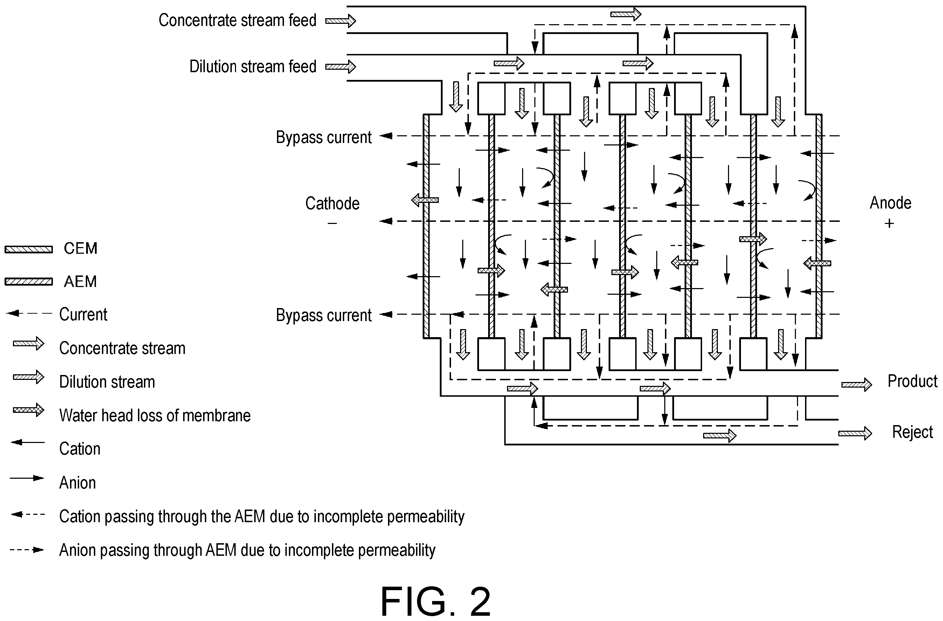

FIG. 2 is a diagram showing the configuration of a known electric deionizer.
FIG. 3 is a flow diagram showing a method for operating a conventional electric deionizer.
FIG. 4 is a graph showing the results of the examples.

### DESCRIPTION OF THE EMBODIMENTS

Hereinafter, an embodiment will be described with reference to the drawings.

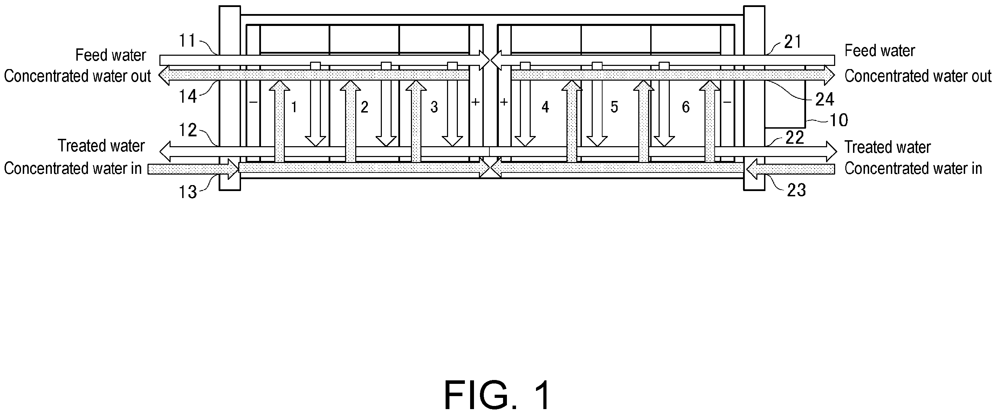

The electric deionizer of FIG. 1, like the electric deionizer of FIG. 3, has sub blocks 1, 2, and 3 having multiple pairs of desalination chambers and concentration chambers between a cathode chamber "-" and an anode chamber "+", and similar sub blocks 4, 5, and 6.

Feed water is supplied to feed water head part (upper head part) of the sub blocks 1 to 3 and the sub blocks 4 to 6 from feed water ports 11 and 21, respectively. In each of the sub blocks 1 to 6, feed water is passed into all the desalination chambers in a downward flow manner. Treated water (desalted water) from the sub blocks 1 to 3 is extracted from a treated water outflow port 12 via the lower head part. Treated water (desalted water) from the sub blocks 4 to 6 is extracted from a treated water outflow port 22 via the lower head part.

Moreover, concentrated water is supplied from concentrated water inflow ports 13, 23 to the concentrated water head part (lower head part) of the sub blocks 1 to 3 and sub blocks 4 to 6, respectively, and the concentrated water is passed into all the concentration chambers in an upward manner. The concentrated water from the sub blocks 1 to 3 is extracted from a concentrated water outflow port 14 via the upper head part. The concentrated water from the sub blocks 4 to 6 is extracted from a concentrated water outflow port 24 via the upper head part.

As described, in each of the sub blocks 1 to 6, the feed water (water to be treated) and the concentrated water flow are passed into the desalination chambers and the concentration chambers in countercurrent flow. That is, in each of the sub blocks 1 to 6 in FIG. 1, feed water is passed into all the desalination chambers in a downward flow manner, and concentrated water is passed into all the concentration chambers in an upward flow manner. Moreover, the water-passing direction is not limited to up-down direction, but may be horizontal or the like. The other configurations in FIG. 1 are the same as those in FIG. 3.

The space velocity SV of the desalination chamber is preferably 70/h to 150/h, and more preferably 100/h to 120/h. The space velocity SV of the concentration chamber is preferably 5/h to 150/h, more preferably 5/h to 50/h, and even more preferably 10/h to 25/h. The recovery rate is preferably 80% to 99%, particularly preferably 90% to 95%. The current to be passed is preferably 0.15 A/(m³/h) to 2.30 A/(m³/h), and more preferably 0.7 A/(m³/h) to 1.2 A/(m³/h).

The feed water quality (electrical conductivity) is preferably 0.1 mS/m to 2.0 mS/m, particularly preferably 0.2 mS/m to 2.0 mS/m, and even more preferably 0.3 mS/m to 1.0 mS/m. The IC (inorganic carbonate) concentration of the feed water is preferably 50 µg/L to 300 µg/L (as C), more preferably µg/L 100 to 200 µg/L (as C).

In FIG. 1, a total of six sub blocks are provided, three on each side, but the number is not limited thereto, as long as there are about one to six.

The number of pairs of desalination chambers and concentration chambers in one Sub block may be about 1 to 100.

### Example

### [Example 1, Comparative Example 1]

### <Experimental conditions>

The electric deionizer used was an IP-VNX55EP-2 manufactured by Evoqua Water Technologies, LLC (558 Clark Road Tewksbury, Massachusetts 01876, USA). The water-passing method of the feed water and the concentrated water was as shown in FIG. 1 in Example 1, and as shown in FIG. 3 in Comparative Example 1. Other conditions are as follows:
Area of membrane: 0.06 m²
Thickness of desalination chamber: 9 mm
Thickness of concentration chamber: 4 mm
Volume of treated water: 10.5 m³/h
Desalination chamber SV: 100/h
Volume of concentrated water: 0.5 m3/h
Concentration chamber SV (Example 1): 22/h
Concentration chamber SV (Comparative Example 1): 44/h
Recovery rate: 95%
Operating current value: 10A
Current density: 0.86 A / (m3 / h)
Conductivity of feed water: 0.5 mS/m
IC concentration of feed water: 150 µ/L as C

### <Results and Discussion>

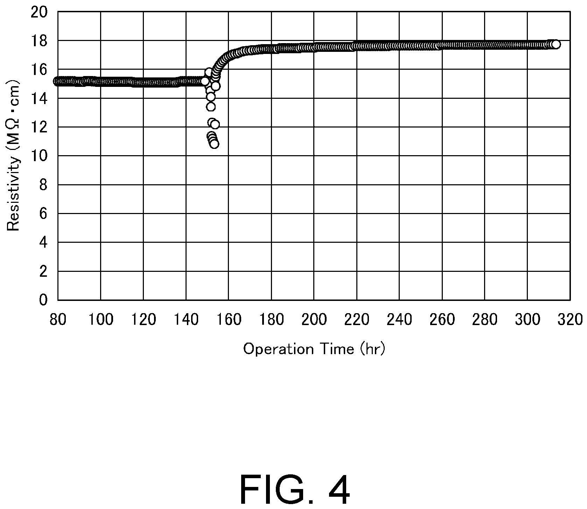

The change in the treated water resistivity over time is shown in FIG. 4. The period from the start of water flow to 150 hours (0 to 150 hours) is Comparative Example 1, and the period from 150 hours onwards is Example 1.

As shown in FIG. 4, in Comparative Example 1, it was not possible to increase the treated water resistivity to 16 MΩ·cm or more, whereas in Example 1, it was possible to increase the treated water resistivity to 18 MΩ·cm.

In the method of Comparative Example 1, by using half the usual amount of water in the first half as a downward flow and in the second half as an upward flow, the linear flow rate in the concentration chamber can be increased, preventing the accumulation of ions in the concentration chamber (and back diffusion due to concentration). However, according to the present invention, the water quality can be improved even though the linear flow rate is half that of the prior art. Thereby, it was confirmed that high purity water can be obtained by preventing back diffusion through passing the concentrated water into all concentration chambers in the opposite direction of the water-passing direction of the water to be treated in the desalination chambers.

Although the present invention has been described in detail with reference to specific embodiments, it will be apparent to those skilled in the art that various modifications may be made without departing from the spirit and scope of the invention.

This application is based on Japanese Patent Application No. 2022-041516 filed on March 16, 2022, the entirety of which is incorporated by reference.

### Reference Signs List

1-6 Sub block
11, 21 Feed water port
12, 22 Treated water outflow port
13, 23 Concentrated water inflow port
14, 24 Concentrated water outflow port

## Claims

1. A method for operating electric deionizer, wherein concentration chambers and desalination chambers are alternately formed between an anode and a cathode by an ion exchange membrane, concentrated water flows through the concentration chambers, and water to be treated flows through the desalination chambers and extracted as product water, and
wherein the concentrated water is passed into all of the concentration chambers in an opposite direction of a water-passing direction of the water to be treated in the desalination chambers.

2. The method for operating electric deionizer according to claim 1, wherein an electrical conductivity of a feed water is 0.1 mS/m to 2.0 mS/m.

3. The method for operating electric deionizer according to claim 1 or 2, wherein an inorganic carbonate concentration of a feed water is 50 µg/L to 300 µg/L as C.

4. The method for operating electric deionizer according to any one of claims 1 to 3, wherein a space velocity SV of the desalination chamber is 70/h to 150/h and a space velocity SV of the concentration chamber is 5/h to 150/h.
